# FASCICULE DE BREVET EUROPEEN

(11) **EP 2 083 619 B1**
(45) Date de publication et mention de la délivrance du brevet: **13.04.2016**
(21) Numéro de dépôt: 07866503.1
(22) Date de dépôt: 26.10.2007
(51) Int. Cl.: A01M 1/14, A01M 1/18, A01M 23/00, A01G 13/10, C08K 3/34, C08L 7/02, C08L 9/10, C08L 9/00

(54) **COMPOSITION DESTINEE A LA LUTTE CONTRE LES INSECTES ET AUTRES ARTHROPODES RAVAGEURS DES PLANTES**
ZUSAMMENSETZUNG ZUR BEKÄMPFUNG VON INSEKTEN UND ANDERE UNGEZIEFER AUF PFLANZEN
COMPOSITION FOR PROTECTING PLANTS AGAINST INSECTS AND OTHER PESTS

(30) Priorité: 27.10.2006 EP 06301096
(43) Date de publication de la demande: 05.08.2009
(73) Titulaire: INSTITUT NATIONAL DE LA RECHERCHE AGRONOMIQUE (INRA), 75341 Paris Cedex 07 (FR); Centre international d'études supérieures en sciences agronomiques Montpellier Supagro, 34060 Montpellier cedex 02 (FR)
(72) Inventeur: PELTIER, Jean Benoît, 34080 Montpellier (FR); TAUZIN, Marc, 34090 Montpellier (FR)
(74) Mandataire: Catherine, Alain
(86) Numéro de dépôt international: PCT/FR2007/052259
(87) Numéro de publication internationale: WO 2008/053115

(56) Documents cités:
- US-A- 1 624 089
- US-A1- 2006 127 435
- DATABASE CA [Online] CHEMICAL ABSTRACTS SERVICE, COLUMBUS, OHIO, US; KOBAYASHI, MASAHIDE ET AL: "Method and polymeric formulations for controlling and preventing the spread of boring insects" XP002418577 extrait de STN Database accession no. 2006:1029409 & JP 2006 262786 A (MEISEI CHEMICAL WORKS, LTD., JAPAN) 5 octobre 2006 (2006-10-05)
- DR. O.A. NEUMÜLLER: "Römpps Chemie-Lexikon" 1988, FRANCKH'SCHE VERLAGSHANDLUNG STUTTGART , XP002418555 page 4488, colonne de gauche
- DATABASE WPI Week 198840 Thomson Scientific, London, GB; AN 1988-283538 XP002476755 & SU 1 381 149 A (AS BELO PHYS ORG CH) 15 mars 1988 (1988-03-15)

## Description

### Domaine de l'invention

La présente invention concerne de manière générale la lutte contre les insectes et autres arthropodes ravageurs des plantes. Elle concerne plus particulièrement une composition destinée à limiter, bloquer ou prévenir l'infestation des plantes par les insectes ravageurs.

### Arrière plan de l'invention

Les ravageurs entraînent des pertes économiques de plusieurs milliards d'euros chaque année dans le domaine agricole. Face à ce problème, les pesticides sont d'un grand secours. Leur utilisation a été multipliée par 32 entre 1950 et 1986, les pays en développement utilisant maintenant le quart de tous les pesticides consommés dans le monde. Toutefois, un emploi incorrect et excessif de ces produits peut contaminer aussi bien les denrées alimentaires que l'environnement et, dans certains cas, nuire à la santé des agriculteurs. Les pesticides tuent également les ennemis naturels des ravageurs, permettant à ceux-ci de se multiplier.

Dans ce cadre, des solutions alternatives ont été développées, et consistent à utiliser par exemple des produits naturels, issus de plantes, de bactéries ou encore des produits minéraux comme insecticide. On peut citer à titre d'exemple l'utilisation de limonène, de linalool ou encore de nicotine. Ces produits naturels se dégradent rapidement dans l'environnement et présentent donc des risques toxiques moindres.

Néanmoins, ces produits s'avèrent parfois peu efficaces, du fait de leur mode d'action, et de leur dégradation rapide.

De plus, l'ensemble des compositions insecticides décrites ci-dessus sont adaptées au traitement d'un genre, d'une famille ou d'une espèce d'insecte parfois très spécifique, ce qui peut représenter un inconvénient lorsqu'une composition à très large spectre est recherchée. En outre, des phénomènes de résistance sont souvent rencontrés avec les compositions insecticides citées ci-dessus. Les ravageurs résistants aux pesticides qui étaient très peu nombreux il y a 50 ans sont en effet aujourd'hui au nombre d'un millier environ, ce qui représente un inconvénient supplémentaire des compositions insecticides décrites ci-dessus.

Il existe donc un besoin pour une nouvelle composition de lutte contre les insectes ravageurs qui ne présente pas les inconvénients ci-dessus, c'est-à-dire une composition qui soit à la fois non toxique pour l'homme, qui présente une efficacité durable dans le temps, et un spectre d'action très large contre une large gamme d'insectes.

Ce besoin pour une nouvelle composition de lutte contre les insectes ravageurs est particulièrement présent dans le domaine de l'arboriculture. Dans ce domaine, des moyens de lutte biologique contre les ravageurs ont été développés comme alternative à l'utilisation de pesticides. Il s'agit de méthodes de lutte qui consistent à introduire dans une culture un ennemi naturel, par exemple un insecte importé d'autres cultures ou provenant d'élevages massifs, pour combattre un ravageur bien identifié.

Aujourd'hui, la lutte biologique à l'aide d'insectes est peu utilisée dans la pratique arboricole pour les raisons suivantes. Il existe tout d'abord de grandes difficultés à mettre en oeuvre la lutte biologique en milieu ouvert. Il est en effet difficile de maîtriser la dispersion et le maintien des insectes dans les cultures. De plus, les conditions de leur développement ne peuvent pas être régulées. Enfin, les techniques de production onéreuses rendent le coût de la protection peu compétitif par rapport à la lutte chimique.

Parallèlement, des moyens de lutte microbiologique faisant appel à des techniques d'application comparables à celles utilisées pour les produits phytosanitaires ont été développés dans le domaine arboricole. Ces moyens de lutte microbiologique contre les ravageurs consistent à répandre sur les arbres, des compositions à base de bactéries. Néanmoins, l'irrégularité de l'efficacité de cette technique est un handicap majeur de cette technique. En effet, le temps d'activation des organismes utilisés ou de leur toxine et les quantités de produits ingérées par le ravageur peuvent varier considérablement en fonction des conditions climatiques.

Ce besoin pour une nouvelle composition de lutte contre les insectes ravageurs est encore plus présent dans le domaine de la culture des palmiers, qui peuvent être la cible d'attaques d'insectes nuisibles tel que le papillon *Paysandisia archon* ou le charançon *Rynchophorus ferrugineus,* insectes contre lesquels peu de moyens de lutte efficace existent aujourd'hui.

En particulier, le papillon *Paysandisia archon* d'origine argentine cause des dégâts notables dans les pays méditerranéens. Tous les types de palmiers peuvent être atteints et plus les palmiers ont de fibres sur leur stipe, plus ils ont de risque d'héberger rapidement cet hôte indésirable.

Dans ce contexte particulier, plusieurs solutions ont été envisagées pour lutter contre les insectes nuisibles infestant les palmiers.

On peut citer en premier lieu l'emploi de phéromones dans le but d'entraîner une confusion sexuelle et de piéger un des partenaires. Ce type de stratégie est cependant inefficace pour lutter contre *Paysandisia archon,* espèce dans laquelle seule la femelle fabrique une phéromone sexuelle, non employable pour un piégeage.

La recherche de prédateurs ou de parasites permettant une lutte biologique contre *paysandisia archon* s'avère également infructueuse.

L'utilisation de compositions insecticides a également été envisagée mais présente les inconvénients cités ci-dessus, et la physiologie du palmier rend très difficile la pénétration et le transport au sein de la plante, de molécules exogènes de type composition insecticides.

De plus, les larves d'insectes sont parfois enfouies profondément sous la surface du stipe des palmiers, rendant l'utilisation de composition insecticide inefficace vis-à-vis de ces larves.

Une solution consistant en un ensachage des couronnes des palmiers par une toile a été envisagée. Cette solution technique risque cependant de créer une sur-infestation des arbres déjà infestés, les insectes se reproduisant sous la toile. De plus, cette solution présente un coût très élevé, et est difficilement réalisable pour traiter des végétaux de grande taille.

Le document SU 1 381 149 A décrit des compositions adhésives pour lutter contre les insectes nuisibles étalés sur des substrats de papier pour former des pièges gluants. Les compositions comprennent de 35 à 40 % de colophane modifiée, de 3 à 5 % de caoutchouc isoprénique synthétique, de 19 à 30 % d'huile minérale et de 8 à 10 % de cire polyéthylène polyoxydée.

Le document US-A1 624 089 A décrit des compositions pouvant comprendre un latex, une huile et éventuellement un agent édulcorant, une argile ou une cire, qui sont destinées à être appliquées sur des bandes de papier ou à la surface d'une plante afin de créer une surface capable de piéger les insectes par collage.

Le document US-2006 127 435 divulgue des compositions utilisables pour former un film protecteur équivalent à une barrière chimique vis-à-vis des nuisibles, qui comprennent de l'argile, un agent pesticide et un polymère pouvant être du polyisoprène.

Le document JP 2006 262786 A décrit des compositions aqueuses capables de former un film à température ambiante et de protéger des arbres contre des insectes. De telles compositions comprennent notamment un composé de haut poids moléculaire qui peut être le latex éventuellement combiné avec des additifs améliorant la résistance au climat ou à l'eau. En particulier, une composition comprenant un polyacrylate d'ester ou un copolymère acryle-nitrile éventuellement combiné avec un copolymère d'acryle-silicone est divulguée.

De telles compositions ne présentent pas cependant une étanchéité optimale et durable vis-à-vis d'un insecte à la surface d'une plante.

Il reste donc également un besoin de trouver rapidement un moyen de lutte contre les insectes ravageurs du palmier.

En particulier, il existe un besoin de développer des compositions applicables sur une plante permettant de créer un revêtement formant une barrière physique durable, c'est-à-dire efficace pendant plusieurs mois, et même jusqu'à un an ou plus après application, et ce, quelles que soient les conditions météorologiques rencontrées, y compris lorsque de fortes amplitudes de températures sont rencontrées.

Il existe en outre un besoin de développer des compositions permettant aisément l'obtention d'une émulsion et pour laquelle peuvent aisément être adaptées les propriétés de viscosité, quelles que soient les conditions climatiques, et en particulier les conditions de température.

Les inventeurs ont donc mis au point une nouvelle composition destinée à la lutte contre les insectes ravageurs, ne présentant pas les inconvénients cités ci-dessus, adaptée au traitement de tous types de plantes et en particulier les arbres, et les palmiers.

### Sommaire de l'invention

Les inventeurs ont découvert qu'il est possible de lutter contre les insectes ravageurs pouvant infester les plantes, en créant une barrière physique projetable, entre l'insecte et la plante.

L'invention a donc pour objet une composition pour former un revêtement étanche vis-à-vis d'un insecte à la surface d'une plante comprenant
(i) de 10% à 90% de latex, et
(ii) de 10% à 90% de composé épaississant,
   les pourcentages étant exprimés en poids par rapport au poids total de la composition, dans laquelle
   - le latex est (α) un matériau élastique élaboré à partir du latex naturel de l'hévéa ou (β) est choisi parmi le groupe constitué par un latex naturel, un élastomère, un polyhydroxyalcanoate, un polyacide lactique et leurs mélanges et
   - le composé épaississant est une combinaison (a) d'huile végétale ou d'un mélange d'huiles végétales et (b) d'une résine ou d'un mélange de résines.

Il est également décrit une composition comprenant :
- du latex ; et
- au moins un composé épaississant, choisi parmi de l'argile, de la glue, une résine, une cire, une gomme, un mucilage, de l'agar, du sorbitol, de l'alginate, un polymère naturel, un polymère synthétique et leurs mélanges, une huile, un acide (gras ou non) ou un alcool ou toute autre substance favorisant l'émulsion ou la coagulation du latex.

Selon un mode de réalisation particulier, le composé épaississant est de la glue, ladite glue comprenant elle-même au moins une huile et au moins une résine.

Selon l'invention, la composition peut comprendre en outre, une cire, une gomme, un mucilage et leurs mélanges.

L'invention a également pour objet un procédé de préparation d'une composition telle que définie ci-dessus, comprenant les étapes successives suivantes, dans lesquelles les pourcentages sont exprimés en poids par rapport au poids total de la composition :
a) le mélange de 20 à 40% de glue avec 10 à 20% d'huile,
b) chauffage de la composition obtenue en a) à une température de 40 à 90°C,
c) le mélange de 10 à 30% de latex avec 5 à 15% d'eau,
d) l'ajout de la composition obtenue à l'étape c) à la composition obtenue à l'étape b),
e) le mélange de la composition obtenue à l'étape d) avec 10 à 30% de latex, et
f) le mélange de la composition obtenue à l'étape e) avec 20 à 40% de glue, à une température de 40 à 90°C,
étant entendu que la glue comprend elle-même, par rapport au poids total de la glue, 40 à 80% en poids d'huile et 20 à 60% en poids de résine.

Enfin, l'invention a encore pour objet l'utilisation d'une composition telle que définie ci-dessus pour former un revêtement étanche vis à vis d'un insecte à la surface d'une plante.

### Description détaillée de l'invention

Les inventeurs ont découvert qu'il est possible de lutter contre les insectes ravageurs pouvant infester les plantes, en créant une barrière physique entre l'insecte et la plante.

Par « barrière physique », on entend au sens de la présente invention un moyen capable de limiter ou de bloquer l'accès d'un insecte, y compris un insecte volant, à une plante, et en ce qui concerne une plante déjà infestée par un insecte ravageur, un moyen capable de créer une entrave au déplacement et au développement de l'insecte.

Cette barrière n'a pas vocation à piéger physiquement les insectes en général sur le support de manière non discriminatoire mais se comporte en tant qu'écran vis-à-vis des ravageurs ciblés.

Une fonction de cette barrière physique est donc d'empêcher le contact entre le ravageur et son hôte et si d'aventure le ravageur tente de passer cet écran, ses capacités physiques doivent être suffisamment altérées pour réduire au minimum le risque qu'il continue son cycle de reproduction/expansion.

Les inventeurs ont donc mis au point une composition destinée à la lutte contre les insectes ravageurs, capable de former, après application sur une plante, un revêtement créant une barrière physique durable entre la plante et l'insecte.

il est décrit dans la présente demande une composition comprenant :
- du latex, et
- au moins un composé épaississant, choisi parmi de l'argile, de la glue, une résine, une cire, une gomme, un mucilage, de l'agar, du sorbitol, de l'alginate, un polymère naturel, un polymère synthétique et leurs mélanges, une huile, un acide (acide gras ou un autre acide, tel qu'un acide carboxylique, y compris l'acide acétique) ou un alcool (éthanol, méthanol, etc.). ou toute autre substance favorisant l'émulsion ou la coagulation du latex (y compris les agents tensio-actifs, en particulier les tensio-actifs à charge neutre).

Dans certains modes de réalisation avantageux, la composition ci-dessus comprend au moins deux agents épaississants, par exemple (i) une huile, préférentiellement une huile végétale, et (ii) une résine.

De manière générale, cette composition peut comprendre tout composant ou mélange de composants, dont les caractéristiques physiques permettent d'une part une application aisée sur la plante, par exemple par pulvérisation ou épandage et permettent, d'autre part, de créer un revêtement présentant une cohésion suffisante pour former une barrière physique à la surface d'une plante.

Par « latex » au sens de l'invention, on entend tout type de matériau élastique élaboré à partir du latex naturel provenant de l'hévéa ou bien un matériau synthétisé artificiellement à partir de polymères, et qui comprend un réseau de chaînes polymérisées.

A titre d'exemple, une composition selon l'invention peut comprendre au moins un composé choisi parmi le latex naturel, un élastomère, un polyhydroxyalcanoate, un polyacide lactique, et leurs mélanges.

La composition peut comprendre en outre un adjuvant ou un mélange d'adjuvants permettant un épaississement de la composition, compatible avec le mode d'application de celle-ci, et par exemple une résine, une cire, une gomme, un mucilage, de l'agar, du sorbitol, de la cellulose, de l'amidon, une protéine et leurs mélanges.

Pour permettre une application aisée de la composition sur la plante, ladite composition pourra également comprendre des adjuvants permettant de modifier la texture de la composition, tels que des agents tensio-actifs, y compris des agents émulsifiants,des adjuvants permettant de faciliter l'application du produit sur la plante, comme une huile ou encore d'autres additifs tels que des pigments.

Parmi les agents tensio-actifs susceptibles d'être compris dans une composition selon l'invention, on préfère les gants tensio-actifs à charge neutre, qui sont bien connus de l'homme du métier.Préférentiellement, on utilise un latex naturel provenant de l'hévéa.

La composition mise au point par les inventeurs permet de créer un revêtement formant une barrière physique durable, c'est-à-dire efficace pendant plusieurs mois, et même jusqu'à un an ou plus après application, et ce, quelles que soient les conditions météorologiques rencontrées, y compris lorsque de fortes amplitudes de températures sont rencontrées.

Les inventeurs ont donc mis au point une composition dont les caractéristiques physiques, et en particulier la viscosité, la cohésion est telle que la composition crée une barrière physique durable entre un insecte et une plante, tout en étant facile à appliquer.

Préférentiellement, la composition selon l'invention possède une viscosité telle que ladite composition peut être aisément appliquée sur les végétaux à protéger, par exemple par projection, et adhérer rapidement sur les végétaux après son application. De plus, la composition selon l'invention possède avantageusement une viscosité telle que la couche de composition, une fois appliquée sur le végétal, par exemple sur le tronc d'un arbre, ait une épaisseur d'au moins quelques millimètres, par exemple une épaisseur d'au moins 3 mm, avantageusement d'au moins 10 mm, préférentiellement d'au moins 20 mm. En règle générale, une couche de la composition selon l'invention appliquée au végétal ne dépasse pas une épaisseur de 100 mm, et avantageusement ne dépasse pas l'épaisseur de 50 mm/

Ainsi, dans certains modes de réalisation, la composition selon l'invention possède une valeur de viscosité dynamique (viscosité de Brookfield) allant de 500 à 8000 mPa.s (milliPascal-seconde), telle que mesurée à la vitesse de 30 rotations par minute (30 rpm) à 20°C. Une composition selon l'invention possédant cette gamme de valeurs de viscosité dynamique possède les propriétés d'aptitude à être projetée, d'aptitude à rester en place localement à l'endroit où la projection est réalisée et la propriété à former une couche de composition de l'épaisseur requise, en particulier d'une épaisseur d'au moins 10 mm.

Une composition selon l'invention possédant la viscosité désirée, du fait notamment de l'épaisseur de la couche qui peut être appliquée, possède la capacité de rester en place et réaliser l'effet de barrière physique pendant une longue période de temps, en général au moins pendant plusieurs mois, par exemple d'au moins trois mois, et en général jusqu'à 12 mois après son application. Une telle propriété avantageuse permet de réduire considérablement la périodicité des applications d'une composition selon l'invention. En général, il est possible de n'appliquer une composition selon l'invention sur le même végétal qu'à raison de deux applications par an, et dans certains cas d'une seule application par an.

De manière tout à fait préférée, une composition selon l'invention possède une viscosité dans la gamme de valeurs de viscosité dynamique (viscosité de Brookfield) allant de 1000 mPa.s à 3000 mPa.s telle que mesurée à la vitesse de 30 rotations par minute (30 rpm), à 20°C. Une composition selon l'invention possédant une valeur de viscosité comprise dans la gamme spécifiée ci-avant possède des propriétés optimales d'applicabilité, de capacité à rester durablement en place après son application, ainsi que la capacité à former des couches de compositions appliquées sur le végétal de l'épaisseur désirée.

L'homme du métier, de par ses connaissances générales, sait adapter la quantité des ingrédients d'une composition selon l'invention, de telle manière à ce que ladite composition possède la valeur de viscosité désirée. En particulier, l'homme du métier adaptera la quantité des ingrédients de la composition afin que la viscosité désirée, ou la gamme de viscosités désirées, soit obtenue pour les valeurs de températures auxquelles seront exposés localement les végétaux traités.

La valeur de viscosité d'une composition optimale selon l'invention allant de 500 m Pa.s à 8000 m Pa.s est la valeur de viscosité de ladite composition immédiatement, après application sur le végétal, c'est-à-dire dans les minutes suivant l'application de ladite composition sur le végétal.

Ainsi, il est décrit dans la présente demande une composition comprenant du latex et au moins un composé épaississant, choisi parmi de l'argile, de la glue, une résine, une cire, une gomme, un mucilage, de l'agar, du sorbitol, de l'alginate, un polymère naturel , un polymère synthétique et leurs mélanges, une huile, un acide (gras ou non) ou un alcool ou toute autre substance favorisant l'émulsion ou la coagulation du latex

La gomme peut être choisie parmi une gomme arabique, une gomme de guar, une gomme xanthane et une gomme adragante.

L'agent épaississant peut être un acide. Les acides sont connus pour provoquer la coagulation du latex. Préférentiellement, on utilise un acide carboxylique, tel que l'acide acétique.

L'agent épaississant peut être un alcool, tel que de l'éthanol ou le méthanol. L'éthanol ou le méthanol peut être avantageusement utilisé à une concentration finale allant de 0,5% à 15% (poids/poids).

La composition de l'invention forme un revêtement créant une barrière physique durable dans le temps entre les insectes ravageurs et la zone traitée de la plante, tout au long du cycle de développement d'un insecte ravageur. La composition limite ou bloque notamment, la ponte des insectes sur les plantes, l'émergence des larves et des adultes nymphoses et enfin l'accès aux plantes traitées et en particulier l'accès aux plaies des végétaux. La composition est donc efficace pour lutter de manière préventive et curative contre les infestations par des insectes ravageurs.

Comme cela a été exposé ci-dessus, la composition objet de l'invention agit par une action mécanique sur les insectes qui est complètement distincte de l'action toxique que peuvent avoir certaines compositions insecticides antérieurement connues.

Par « composé épaississant », on entend au sens de la présente invention un composé, qui une fois ajouté au latex, a pour effet d'augmenter la viscosité de celui-ci. L'augmentation de viscosité peut être immédiate, c'est-à-dire avoir lieu au moment du mélange du latex et du composé épaississant ou être progressive, après application de la composition de l'invention sur la plante, au contact de l'air.

La composition selon l'invention, permet de former un revêtement à la surface d'une plante, qui reste efficace plusieurs mois après application.

De préférence, le latex comprend au moins 30% en poids de polyisoprène. A titre d'exemple, le latex est du latex naturel issu de l'hévéa comprenant environ, en poids par rapport au poids total du latex 34% de poly-isoprène. Bien entendu, un latex disponible commercialement, comprenant 60% de polyisoprène ou plus convient également à la réalisation de l'invention.

La composition objet de l'invention peut comprendre, en poids par rapport au poids total de la composition :
- 10 à 90% de latex et
- 10 à 90% de composé épaississant.

De préférence, la composition objet de l'invention peut comprendre, en poids par rapport au poids total de la composition :
- 20 à 60% de latex et
- 40 à 80% de composé épaississant.

Il est décrit que le composé épaississant peut être un polymère naturel, celui-ci peut être choisi parmi la cellulose, l'amidon, une protéine, une résine et leurs mélanges.

Il est également décrit que le composé épaississant peut également être un polymère synthétique, et par exemple un polyhydroxyalcanoate, un élastomère, un polyacide lactique, et leurs mélanges.

Dans un mode de réalisation préféré de l'invention , le composé épaississant mis en oeuvre dans la composition objet de l'invention , quelle que soit sa nature, est biodégradable, c'est-à-dire qu'il se décompose en formant des résidus non toxiques ou même sans former de résidus, lorsqu'il est en contact avec l'environnement.

Le mélange du latex avec le composé épaississant permet de former une composition dont la viscosité évolue au cours du temps selon trois phases, dont la durée dépend en grande partie des conditions climatiques rencontrées.

Au cours d'une première phase, la viscosité de la composition est relativement faible, c'est à dire compatible avec une application sur une plante, par exemple par épandage. Au cours d'une deuxième phase, après application sur la plante, la viscosité de la composition augmente, ce qui permet de former un revêtement qui va durcir. Enfin, au cours d'une troisième phase, la viscosité de la composition diminue pour former un revêtement ayant la consistance d'un gel épais.

Sans vouloir être lié par une quelconque théorie, les inventeurs pensent que la composition objet de l'invention est la plus efficace au cours de la troisième phase, pouvant durer plusieurs mois.

Il est décrit que le composé épaississant peut comprendre de l'argile. A titre d'exemple, une composition peut comprendre, en poids par rapport au poids total de la composition 50% en poids d'argile, et 50% en poids de latex.

Par « argile » on entend au sens de la présente invention une composition comprenant une roche sédimentaire essentiellement à base de minéraux tels que la kaolinite, la montmorillonite, et l'illite.

L'argile utilisée à titre de composé épaississant se présente de préférence sous la forme d'une composition comprenant 10 à 20% p/v d'argile dans de l'eau.

L'utilisation d'argile à titre de composé épaississant au sein d'une composition est particulièrement avantageuse. En effet, une composition comprenant de l'argile est tout d'abord intéressante d'un point de vue économique, compte tenu du faible coût de l'argile. Ensuite, une composition comprenant de l'argile permet de créer un revêtement formant non seulement une barrière physique vis-à-vis des arthropodes, mais également un revêtement formant une barrière contre le rayonnement ultraviolet, permettant de limiter la dégradation du latex au contact de l'air ambiant.

Dans un mode de réalisation particulier de l'invention, le composé épaississant comprend de la glue, ladite glue comprenant elle-même au moins une huile et au moins une résine.

L'utilisation de glue à titre de composé épaississant au sein de la composition objet de l'invention est particulièrement avantageuse. En effet, une composition comprenant de la glue permet de créer un revêtement formant une barrière physique collante vis-à-vis des arthropodes, qui a pour effet de piéger les insectes ou bien d'endommager les capacités motrices ou respiratoires des insectes venant au contact du revêtement. Ainsi, les arthropodes adultes comme le papillon Paysandisia archon, venant par exemple pondre des oeufs sur la plante, s'engluent les ailes et deviennent inaptes au vol, lorsqu'ils entrent en contact avec le revêtement objet de l'invention. Les imagos du charançon Rhynchophorus sont au contact de cette barrière affaiblis et meurent asphyxiés par colmatage de leur voies respiratoires (trachées).

L'homme du métier pourra aisément choisir entre l'utilisation d'argile, de glue ou de leur mélange à titre de composé épaississant en fonction du type d'infestation, et de la saison pendant laquelle la composition doit être appliquée.

Sans vouloir être liés à une quelconque théorie, les inventeurs pensent que des compositions comprenant du latex ou de l'argile, présentent des modes d'action différents.

En effet, les inventeurs pensent qu'une composition à base de latex et d'argile, permet de créer un revêtement présentant une forte cohésion, c'est-à-dire capable de limiter fortement l'émergence d'adultes à partir de larves présentes dans ou sur la plante. De même, une composition à base d'argile limite ou gêne la ponte des femelles sur la plante, mais ne piège pas les femelles elles-même venant pondre.

A l'inverse une composition à base de latex et de glue piège les femelles venant pondre, du fait de l'aspect collant de la composition à base de glue, mais est moins efficace pour bloquer l'émergence d'adultes à partir de larves présentes dans ou sur la plante.

En conséquence, l'homme du métier pourra aisément choisir le type de composition à utiliser en fonction de la saison, du type d'insecte à traiter, et du stade de développement (adulte, larve, etc.) dans lequel se présentent la majorité des insectes au moment du traitement.

Dans certains modes de réalisation avantageux d'une composition selon l'invention, ladite composition comprend :
- du latex,
- une huile végétale ou un mélange d'huiles végétales, et
- une résine ou un mélange de résines.

La composition ci-dessus comprend la combinaison de deux agents épaississants, au sens de la présente description, respectivement (a) une huile végétale ou un mélange d'huiles végétales et (b) une résine ou un mélange de résines.

Sans vouloir être lié par une quelconque théorie, le demandeur pense que la présence de la ou des huile(s) végétale(s) favorisent l'obtention d'une composition selon l'invention qui se présente sous la forme d'une émulsion.

Egalement, le demandeur pense que la présence de la ou des résines permet de contrôler les propriétés de viscosité de la composition finale.

Ainsi, la préparation d'une composition selon l'invention avec au moins les trois composants ci-dessus permet l'obtention d'une composition finale sous la forme d'une émulsion et qui possède les propriétés de viscosité désirées.

Sans vouloir être lié par une quelconque théorie, le demandeur pense que la combinaison (i) du latex, (ii) d'une huile végétale ou d'un mélange d'huiles végétales et (iii) d'une résine ou d'un mélange de résines est favorable à l'obtention d'une composition selon l'invention pour laquelle peuvent aisément adaptées les propriétés de viscosité, quelles que soient les conditions climatiques, et en particulier es conditions de température, qui sont rencontrées localement.

Sans vouloir être lié par une quelconque théorie, le demandeur pense supplémentairement qu'une composition selon l'invention, qui comprend la combinaison des trois types d'ingrédients ci-dessus, est optimalement adaptée à la formation d'une composition se présentant sous la forme d'une émulsion.

La génération d'une composition selon l'invention sous la forme d'une émulsion ait aisément réalisée par l'homme du métier selon toute technique connue, par exemple par simple agitation du mélange des ingrédients que ladite composition comprend.

L'huile d'origine végétale utilisée dans la glue est de préférence choisie parmi l'huile de soja, l'huile de tournesol, l'huile de colza, l'huile de pépins de raisin, l'huile d'arachide, l'huile d'olive, l'huile de canola, l'huile de carthame, l'huile de coprah, l'huile de germe de blé, l'huile de lin, l'huile de maïs, l'huile de noix, l'huile d'amande, l'huile de palme, l'huile de ricin, l'huile de sésame, et leurs mélanges.
De préférence, la résine d'origine végétale est la colophane.

Des illustrations avantageuses de compositions selon l'invention comprenant (i) du latex, (ii) une ou plusieurs huiles végétales et (iii) une ou plusieurs résines sont décrites ci-dessous.

Lorsque de la glue est utilisée dans la composition objet de l'invention ladite glue peut comprendre, en poids par rapport au poids total de la glue :
- 40 à 80 d'huile et
- 20 à 60% en poids de résine.

A titre d'exemple de glue on peut citer une glue arboricole comprenant en poids par rapport au poids total de la glue :
- 64% d'huile de ricin
- 32% de résines.

La glue utilisée peut comprendre en outre un composé choisi parmi, une gomme, une cire, un mucilage et leurs mélanges. A titre d'exemple de glue pouvant également être utilisée pour réaliser une composition conforme à l'invention, on peut citer une glue comprenant, en poids par rapport au poids total de la glue :
- 40% d'huile de résine,
- 35% de résine,
- 20% d'huile de ricin, et
- 5% de cire d'abeille.

Ainsi, de préférence, une composition conforme à l'invention comprend, en poids par rapport au poids total de la composition :
- 20 à 60% de latex, et
- 40 à 80% de glue.

L'homme du métier pourra facilement adapter la concentration de latex et de glue au sein de la gamme définie ci-dessus en fonction des objectifs visés. En effet, les inventeurs ont observé que plus la concentration en latex est forte, plus le revêtement obtenu à partir de la composition sera durable et résistant. Au contraire, plus la concentration en glue sera forte, plus la composition sera collante.

A titre d'exemple, une composition conforme à l'invention peut comprendre 80% de glue et 20% de latex. Une telle composition permet de former un revêtement très collant et fibreux. Une composition comprenant 60% de glue et 40% de latex permet de former un revêtement peu collant au moment de l'application, qui devient de plus en plus collant au cours du temps, résistant bien à des températures élevées. Une composition comprenant 40% de glue et 60% de latex permet de former un revêtement peu ou pas collant au moment de l'application, efficace pour une longue période, pouvant atteindre 3 mois ou plus.

A titre d'exemple, la composition selon l'invention peut comprendre en poids par rapport au poids total de la composition :
- 15% à 30% de résine,
- 25 à 50% d'huile, et
- 20 à 60% de latex.

Sans vouloir être lié par une quelconque théorie, les inventeurs pensent que le latex permet de former un réseau permettant de retenir aisément un ou plusieurs adjuvants qui peuvent être ajoutés à la composition objet de l'invention. En conséquence, pour permettre une application aisée de la composition sur la plante, ladite composition peut comprendre des adjuvants permettant de modifier la texture de la composition, tels que des émulsifiants, des adjuvants permettant de faciliter l'application du produit sur la plante, comme une huile, et par exemple une huile végétale telle que définie ci-dessus ou encore d'autres additifs tels que des pigments.

En outre, la composition objet de l'invention peut comprendre un répulsif naturel destiné à éloigner les arthropodes et par exemple une huile essentielle.

Comme cela a été rappelé ci-dessus, la composition de l'invention agit par une action mécanique sur les insectes, complètement distincte de l'action toxique que peuvent avoir certaines compositions insecticides antérieurement connues.

Du fait de cette action essentiellement mécanique, la composition objet de l'invention possède un très large spectre d'action et est efficace pour lutter contre l'infestation des plantes par tous types d'arthropodes, y compris les insectes, et les insectes volants tels que les papillons.

A titre d'exemples non limitatifs d'insectes et d'arthropodes contre lesquels la composition objet de l'invention permet de lutter, on peut citer par exemple les insectes et arthropodes appartenant à une famille choisie parmi les familles suivantes : Homoptera, Heteroptera, Thysanoptera, Orthoptera, Anoplura, Siphonaptera, Mallophaga, Thysanura, Isoptera, Psocoptera, Hymenoptera, Acarina, Diptera, Lepidoptera, Coleoptera and Dictyoptera.

Les plantes pouvant être traitées par la composition objet de l'invention sont de préférence des arbres ou des plantes arborifères, et par exemple des arbres utilisés dans le domaine de l'arboriculture, de la sylviculture ou encore des arbres d'ornement.

La composition objet de l'invention peut par exemple être utile pour lutter contre les larves de zeuzères des arbres fruitiers, des scolytes des ormes, des processionnaires des conifères ou feuillus, des mineuses telles que celle du marronnier et plus généralement contre les larves de coléoptères des arbres ligneux.

La composition objet de l'invention peut être utilisée dans une large gamme de température, la rendant ainsi très efficace pour lutter non seulement contre les insectes ravageurs des arbres cultivés dans des zones tempérées, mais aussi contre les insectes ravageurs des arbres cultivés dans des zones dans lesquelles de fortes amplitudes de températures sont rencontrées.

A titre d'exemple d'arbres cultivés dans des zones tempérées pouvant être traités, on peut citer les arbres appartenant aux genres Pyrus, Malus, Prunus, Sorbus, Ulmus, Quercus, Tilia, Betula, Fagus, Castanea, Platanus, Aesculus, Juglans, Zizyphus, Diospyros, Salix, Populus, Cercis, Celtis, Picea, Pinus, Eucalyptus, et Acer.

A titre d'exemple d'arbres cultivés dans des zones dans lesquelles de fortes températures sont rencontrées, on peut citer le goyavier (Psidium guayava L.), le manguier greffé (Mangifera indica L.) le papayer solo (Carica papaya L.), le papayer ordinaire (Carica papaya L.), le sapotillier (Achras sapota L.) le citronnier (Citrus limon L. Burm), l'oranger (Citrus sinensis L. Osb.), le badamier (Terminalia macrophylla), le bananier (Musa paradisiaca L.), l'anacardier (Anacardium occidentale L.) le manguier ordinaire (Mangifera *indica L.*) le grenadier (*Punica granatum L.*) le fruit de la passion (*Passiflora cerulea L.*) le corossolier (*Annona muricata L.*) la pomme cannelle (*Annona escamosa L.*) le mandarinier (*Citrus reticula Blanca*) le pomélo (*Citrus paradisi Macf.*) le nëw (*Parinari macrophylla*) ou encore le cerisier (*Aphania senegalensis, Malpighia sp*).

De plus, les caractéristiques notamment physiques de la composition la rendent particulièrement adaptée à un épandage sur tout type de stipes de palmiers fibreux ou lisses.

A titre d'exemple de palmiers pouvant être traités, on peut citer les genres appartenant à la famille Arecaceae, et en particulier Acanthophoenix, Acoelorrhaphe, Acrocomia, Actinokentia, Actinorhytis, Aiphanes, Allagoptera, Alloschmidia, Alsmithia, Ammandra, Antongilia, Aphandra, Archontophoenix, Areca, Arenga, Asterogyne, Astrocaryum, Attalea, Bactris, Balaka, Barcella, Basselinia, Beccariophoenix, Bentinckia, Bismarckia, Borassodendron, Borassus, Brahea, Brassiophoenix, Brongniartikentia, Burretiokentia, Butia, Calamus, Calospatha, Calyptrocalyx, Calyptrogyne, Calyptronoma, Campecarpus, Carpentaria, Carpoxylon, Caryota, Catoblastus, Ceratolobus, Ceroxylon, Chamaedorea, Chamaerops, Chambeyronia, Chelyocarpus, Chrysalidocarpus, Chuniophoenix, Clinosperma, Clinostigma, Coccothrinax, Cocos, Colpothrinax, Copernicia, Corypha, Cryosophila, Cyphokentia, Cyphophoenix, Cyphosperma, Cyrtostachys, Daemonorops, Deckenia, Desmoncus, Dictyocaryum, Dictyosperma, Drymophloeus, Dypsis, Elaeis, Eleiodoxa, Eremospatha, Eugeissona, Euterpe, Gastrococos, Gaussia, Geonoma, Goniocladus, Gronophyllum, Guihaia, Gulubia, Halmoorea, Hedyscepe, Heterospathe, Howeia, Hydriastele, Hyophorbe, Hyospathe, Hyphaene, Iguanura, Iriartea, Iriartella, Itaya, Jessenia, Johannesteijsmannia, Juania, Jubaea, Jubaeopsis, Kentiopsis, Kerriodoxa, Korthalsia, Laccospadix, Laccosperma, Latania, Lavoixia, Lemurophoenix, Leopoldinia, Lepidocaryum, Lepidorrhachis, Licuala, Linospadix, Livistona, Lodoicea, Louvelia, Loxococcus, Lytocaryum, Mackeea, Manicaria, Marojejya, Masoala, Mauritia, Mauritiella, Maxburretia, Maximiliana, Medemia, Metroxylon, Moratia, Myrialepis, Nannorrhops, Nenga, Neodypsis, Neonicholsonia, Neophloga, Neoveitchia, Nephrosperma, Normanbya, Nypa, Oenocarpus, Oncocalamus, Oncosperma, Orania, Oraniopsis, Orbigyna, Palandra, Parajubaea, Pelagodoxa, Phloga, Phoenicophorium, Phoenix, Pholidocarpus, Pholidostachys, Physokentia, Phytelephas, Pigafetta, Pinanga, Plectocomia, Plectocomiopsis, Podococcus, Pogonotium, Polyandrococos, Prestoea, Pritchardia, Pritchardiopsis, Pseudophoenix, Ptychococcus, Ptychosperma, Raphia, Ravenea, Reinhardtia, Retispatha, Rhapidophyllum, Rhapis, Rhopaloblaste, Rhopalostylis, Roscheria, Roystonea, Sabal, Salacca, Satakentia, Scheelea, Schippia, Sclerosperma, Serenoa, Siphokentia, Socratea, Sommieria, Syagrus, Synechanthus, Tectiphiala, Thrinax, Trachycarpus, Trithrinax, Veillonia, Veitchia, Verschaffeltia, Voanioala, Vonitra, Wallichia, Washingtonia, Welfia, Wendlandiella, Wettenia, Wodyetia, Ynesa, Zombia.

L'infestation des palmiers par le papillon *Paysandisia archon* est problématique. La composition objet de l'invention après épandage sur un palmier, forme un revêtement permettant de lutter efficacement contre ce ravageur.

La composition objet de l'invention permet également de lutter efficacement contre l'infestation des palmiers par les insectes appartenant aux espèces suivantes *Rynchophorus ferrugineus, Rynchophorus vulneratus, Rynchophorus lobatus, Rynchophorus distinctus, et Rynchophorus bilineatus.*

La composition objet de l'invention peut être épandue sur une planté, en particulier un arbre par tout moyen connu de l'homme du métier, et par exemple en utilisant une projeteuse à gouttelettes ou à produits pâteux. De manière générale la composition objet de l'invention doit être épandue à la surface d'une plante de sorte à former un revêtement à la surface d'une plante, dans une zone infestée ou susceptible d'être infestée par un insecte ravageur. Il peut s'agir par exemple de la partie supérieure du tronc d'un arbre, ou de la partie supérieure du stipe ou du bourgeon apical en ce qui concerne les palmiers.

La composition objet de l'invention peut également être pulvérisée sur une plante, sous forme de fines gouttelettes sur l'ensemble de la plante, ou sur une partie de celle-ci pour empêcher la propagation du ravageur. Ce mode d'épandage par pulvérisation est particulièrement préféré lorsque la composition objet de l'invention est destinée à être appliquée sur des plantes non ligneuses.

L'invention a donc également pour objet l'utilisation d'une composition telle que définie ci-dessus pour former un revêtement étanche vis-à-vis d'un insecte à la surface d'une plante, et en particulier pour former un réseau discontinu de gouttelettes collantes gênant ou piégeant les insectes et autres arthropodes ravageurs des plantes.

Au moment de l'application, l'homme du métier pourra prévoir d'abaisser temporairement la viscosité de la composition objet de l'invention, de manière à faciliter l'épandage de celle-ci à la surface de la plante. Cet abaissement temporaire de la viscosité peut être réalisé par exemple en ajoutant un solvant.

L'invention a également pour objet un procédé de préparation d'une composition telle que définie ci-dessus, comprenant par rapport au poids total de la composition :
- 10 à 90% en poids de latex, et
- 10 à 90% en poids de glue.

Ledit procédé comprend les étapes successives suivantes, dans lesquelles les pourcentages sont exprimés en poids par rapport au poids total de la composition :
a) le mélange de 20 à 40% de glue avec 10 à 20% d'huile,
b) chauffage de la composition obtenue en a) à une température de 40 à 90°C,
c) le mélange de 10 à 30% de latex avec 5 à 15% d'eau,
d) l'ajout de la composition obtenue à l'étape c) à la composition obtenue à l'étape b),
e) le mélange de la composition obtenue à l'étape d) avec 10 à 30% de latex, et
f) le mélange de la composition obtenue à l'étape e) avec 20 à 40% de glue, à une température de 40 à 90°C,
étant entendu que la glue comprend elle-même, par rapport au poids total de la glue, 40 à 80% en poids d'huile et 20 à 60% en poids de résine.

De préférence, à l'étape f), le mélange est arrêté au moment de l'apparition de longs filaments, lorsque la composition durcit.

L'invention a aussi pour objet un procédé de préparation d'une composition telle que définie dans la présente description, comprenant les étapes successives suivantes, dans lesquelles les pourcentages sont exprimés en poids par rapport au poids total de la composition :
a) Dilution 1 : 1 eau/latex (60%) représentant 50% du produit final
b) Incorporation au latex dilué d'huile représentant 12,5% du produit final
c) Chauffage (entre 40°C et 90°C) et incorporation au mélange huile + latex de la glue représentant 37,5% du produit final.

La demande décrit enfin un procédé de préparation d'une composition comprenant du latex et de l'argile, ledit procédé comprenant au moins une étape au cours de laquelle on mélange une composition comprenant 16% p/v d'argile dans de l'eau avec du latex, de sorte à obtenir une composition comprenant 50% en poids de latex et 50% en poids de ladite composition comprenant 16% p/v d'argile dans de l'eau.

L'invention est en outre illustrée par les exemples non limitatifs suivants. Dans les exemples 1 à 4 suivants, du latex naturel, comprenant 60% en poids de polyisoprène, par rapport au poids total du latex a été utilisé. Dans les exemples 1 et 2, une glue dont la composition est donnée ci-après a été utilisée :
Glue comprenant, en poids par rapport au poids total de la glue :
   - 40% d'huile de résine,
   - 35% de colophane,
   - 20% d'huile de ricin, et
   - 5% de cire d'abeille.

### Exemple 1 : compositions conformes à l'invention, comprenant de la glue

### Composition 1

les pourcentages sont des pourcentages en poids par rapport au poids total de la composition
- 20% de latex, et
- 80% de glue.

### Composition 2

les pourcentages sont des pourcentages en poids par rapport au poids total de la composition
- 40% de latex, et
- 60% de glue.

### Composition 3

les pourcentages sont des pourcentages en poids par rapport au poids total de la composition
- 50% de latex, et
- 50% de glue.

### Composition 4

les pourcentages sont des pourcentages en poids par rapport au poids total de la composition
- 60% de latex, et
- 40% de glue.

La composition 1, comprenant une forte concentration de glue permet de former un revêtement très collant et fibreux. La composition 2, comprenant plus de composé épaississant, sous forme de latex, que la composition 1, permet de former un revêtement moins collant, résistant bien à des températures élevées. Un résultat similaire peut être obtenu avec la composition 3. Enfin, la composition 4 permet de former un revêtement peu ou pas collant au moment de l'application, efficace pour une longue période, pouvant atteindre 3 mois ou plus, qui deviendra collant au cours du temps, au contact de l'air ambiant.

### Exemple 2 : Procédé de fabrication d'une composition conforme à l'invention, comprenant de la glue

Une composition conforme à l'invention a été préparée en suivant les étapes successives suivantes :
a) 5 litres de glue sont mélangés à 2,5 litres d'huile végétale,
b) la composition obtenue en a) est chauffée à une température de 40 à 90°C,
c) séparément, 3 litres de latex naturel concentré à 60% sont mélangés à 2 litres d'eau, (1)
d) la composition obtenue à l'étape c) est ajoutée à la composition obtenue à l'étape b),
e) la composition obtenue à l'étape d) est mélangée à 5 litres de latex naturel concentré à 60%, et
f) 2,5 litres de glue chauffée sont incorporées à la composition obtenue à l'étape e).(2)
   (1) Le latex est mélangé à de l'eau lors de la première introduction de sorte à éviter un épaississement rapide de la composition.
   (2) L'incorporation de glue chauffée à l'étape f) permet d'affiner la consistance de la composition, jusqu'à l'obtention d'une pâte liquide mais épaisse.

### Exemple 3 : composition conformes à l'invention, comprenant de l'argile

### Composition 5

Sauf indication contraire, les pourcentages sont des pourcentages en poids par rapport au poids total de la composition :
- 50% d'une composition comprenant 16% p/v d'argile diluée dans l'eau, et
- 50% de latex naturel concentré à 60%.

### Exemple 4 : Procédé de fabrication d'une composition conforme à l'invention, comprenant de l'argile

Une composition conforme à l'invention a été préparée en suivant les étapes successives suivantes :
a) une solution mère d'argile comprenant 33% p/v d'argile a été diluée dans de l'eau pour obtenir une composition comprenant 16% p/v d'argile dans l'eau.
b) la composition obtenue en a) est mélangée avec du latex, de sorte à obtenir une composition comprenant 50% en poids de latex et 50% en poids de la composition obtenue en a).

### Exemple 5 : Composition conforme à l'invention comprenant de la glue, adaptée aux conditions de basse température.

*Rhynchophorus ferrugineus* (charançon rouge du palmier) peut-être piégé en France (corse) presque toute l'année.

La formulation de la glue mise au point au départ pour lutter contre *Paysandisia* qui est présent pendant tout l'été perd une partie de ses propriétés à basses températures (< 15°C.). Pour pallier à ce problème une glue dite « d'hiver » a été mise au point et forme un écran très collant, même à des températures proche de 0°C.

### Constitution qualitative et quantitative en ingrédients

La constitution de cette composition adaptée aux conditions hivernales est la suivante :
- Huile de colza : 73 %
- Huile de palme (stéarine) : 9 %
- Colophane : 9 %
- Latex (60%) : 9%

### Procédé de préparation

Les huiles sont mélangées dans un premier temps avec la colophane et le mélange peut-être stocké en tant que tel. Ensuite le latex est incorporé au mélange huile/colophane et mélangé jusqu'à l'obtention de la bonne texture.

Cette glue peut-être aussi utilisée contre la processionnaire du pin (Thaumetopoea pityocampa) par exemple en application en anneau sur le tronc de l'arbre empêchant ainsi la chenille d'aller se métamorphoser dans le sol (février à avril) et bloquant ainsi le cycle.

### Exemple 6 : Composition conforme à l'invention comprenant du latex, adaptée aux conditions de haute température.

Dans le but de diminuer les coûts de production et faciliter le stockage à long terme, une glue alternative résistante aux fortes températures, comme la glue initiale d'été utilisée contre Paysandisia, a été mise au point.

### Constitution qualitative et quantitative en ingrédients

Sa composition est la suivante :
- Huile de colza : 60 %
- Huile de résine : 5 %
- Huile de ricin : 10 %
- Colophane : 5 %
- Latex (60%) : 20 %

Le latex 60% est obtenu par concentration (x 2) du latex naturel sortant de l'hévéa

## Revendications

1. Composition pour former un revêtement étanche vis-à-vis d'un insecte à la surface d'une plante comprenant
(i) de 10% à 90% de latex, et
(ii) de 10% à 90% de composé épaississant,
les pourcentages étant exprimés en poids par rapport au poids total de la composition, dans laquelle
- le latex est (α) un matériau élastique élaboré à partir du latex naturel de l'hévéa ou (β) est choisi parmi le groupe constitué par un latex naturel, un élastomère, un polyhydroxyalcanoate, un polyacide lactique et leurs mélanges et
- le composé épaississant est une combinaison (a) d'huile végétale ou d'un mélanges d'huiles végétales et (b) d'une résine ou d'un mélange de résines.

2. Composition selon la revendication 1, **caractérisée en ce que** le latex est un matériau élastique élaboré à partir du latex naturel de l'hévéa.

3. Composition selon l'une des revendications 1 ou 2, **caractérisée en ce que** le latex comprend au moins 30% en poids de polyisoprène.

4. Composition selon l'une des revendications 1 à 3, **caractérisée en ce que** l'huile végétale est choisie parmi l'huile de soja, l'huile de tournesol, l'huile de colza, l'huile de pépins de raisin, l'huile d'arachide, l'huile d'olive, l'huile de canola, l'huile de carthame, l'huile de coprah, l'huile de germe de blé, l'huile de lin, l'huile de maïs, l'huile de noix, l'huile d'amande, l'huile de palme, l'huile de ricin, l'huile de sésame, et leurs mélanges.

5. Composition selon l'une quelconque des revendications 1 à 4, **caractérisée en ce que** la résine est la colophane.

6. Composition selon l'une quelconque des revendications 1 à 5, **caractérisée en ce qu'**elle comprend, en outre, une cire, une gomme, un mucilage et leurs mélanges.

7. Composition selon l'une quelconque des revendications 1 à 6, **caractérisée en ce qu'**elle comprend, en outre, un ou plusieurs agents émulsifiants.

8. Composition selon l'une des revendications 1 à 7, **caractérisée en ce que** la composition comprend, en poids par rapport au poids total de la composition :
- 15% à 30% de résine,
- 25% à 50% d'huile, et
- 20% à 60% de latex.

9. Procédé de préparation d'une composition telle que définie dans la revendication 8, comprenant les étapes successives suivantes, dans lesquelles les pourcentages sont exprimés en poids par rapport au poids total de la composition :
a) le mélange de 20 à 40% de glue comprenant au moins une huile et au moins une résine avec 10 à 20% d'huile,
b) chauffage de la composition obtenue en a) à une température de 40 à 90°C,
c) le mélange de 10 à 30% de latex avec 5 à 15% d'eau,
d) l'ajout de la composition obtenue à l'étape c) à la composition obtenue à l'étape b),
e) le mélange de la composition obtenue à l'étape d) avec 10 à 30% de latex, et
f) le mélange de la composition obtenue à l'étape e) avec 20 à 40% de gluee, à une température de 40°C à 90°C, étant entendu que la glue comprend elle-même, par rapport au poids total de la glue, 40% à 80% en poids d'huile et 20% à 60% en poids de résine.

10. Procédé de préparation d'une composition selon la revendication 8, comprenant les étapes successives suivantes, dans lesquelles les pourcentages sont exprimés en poids par rapport au poids total de la composition :
a) Dilution 1 : 1 eau/latex (60%) représentant 50% du produit final
b) Incorporation au latex dilué d'huile représentant 12,5% du produit final
c) Chauffage (entre 400°C et 900°C) et incorporation au mélange (huile + latex) de la glue représentant 37,5% du produit final.

11. Utilisation d'une composition selon l'une quelconque des revendications 1 à 8 pour former un revêtement étanche vis-à-vis d'un insecte à la surface d'une plante.

12. Utilisation selon la revendication 11 pour lutter contre l'infestation des palmiers par des insectes appartenant aux espèces choisies parmi le groupe constitué par *Rynchophorus ferrugineus, Rynchophorus vulneratus, Rynchophorus lobatus, Rynchophorus distinctus et Rynchphorus bilineatus.*

## Patentansprüche

1. Zusammensetzung zur Herstellung einer für ein Insekt dichten Beschichtung auf der Oberfläche einer Pflanze, umfassend
(i) 10% bis 90% Latex und
(ii) 10% bis 90% verdickende Verbindung,
wobei die Prozentangaben in Gewichtsprozent, bezogen auf das Gesamtgewicht der Zusammensetzung, ausgedrückt sind, wobei
- der Latex (α) eine elastische Substanz ist, die ausgehend von natürlichem Kautschukbaum-Latex hergestellt ist, oder (β) aus der Gruppe ausgewählt ist, die aus einem natürlichen Latex, einem Elastomer, einem Polyhydroxyalkanoat, einer Polymilchsäure und deren Gemischen besteht, und
- die verdickende Verbindung eine Kombination aus (a) Pflanzenöl oder einem Gemisch von Pflanzenölen und (b) einem Harz oder einem Gemisch von Harzen ist.

2. Zusammensetzung nach Anspruch 1, **dadurch gekennzeichnet, dass** der Latex eine elastische Substanz ist, die ausgehend von natürlichem Kautschukbaum-Latex hergestellt ist.

3. Zusammensetzung nach einem der Ansprüche 1 oder 2, **dadurch gekennzeichnet, dass** der Latex mindestens 30 Gew.-% Polyisopren umfasst.

4. Zusammensetzung nach einem der Ansprüche 1 bis 3, **dadurch gekennzeichnet, dass** das Pflanzenöl aus Sojaöl, Sonnenblumenöl, Rapsöl, Traubenkernöl, Erdnussöl, Olivenöl, Canolaöl, Färberdistelöl, Kokosnussöl, Weizenkeimöl, Leinöl, Maisöl, Nussöl, Mandelöl, Palmöl, Rizinusöl, Sesamöl und deren Gemischen ausgewählt ist.

5. Zusammensetzung nach einem der Ansprüche 1 bis 4, **dadurch gekennzeichnet, dass** es sich bei dem Harz um Kolophonium handelt.

6. Zusammensetzung nach einem der Ansprüche 1 bis 5, **dadurch gekennzeichnet, dass** sie außerdem ein Wachs, ein Gummi, ein Pflanzenschleim und deren Gemische umfasst.

7. Zusammensetzung nach einem der Ansprüche 1 bis 6, **dadurch gekennzeichnet, dass** sie außerdem ein oder mehrere Emulgatoren umfasst.

8. Zusammensetzung nach einem der Ansprüche 1 bis 7, **dadurch gekennzeichnet, dass** die Zusammensetzung in Gewichtsprozent, bezogen auf das Gesamtgewicht der Zusammensetzung:
- 15% bis 30% Harz,
- 25% bis 50% Öl und
- 20% bis 60% Latex
umfasst.

9. Verfahren zur Herstellung einer Zusammensetzung nach Anspruch 8, das die nachstehenden aufeinander folgenden Schritte umfasst, wobei die Prozentangaben in Gewichtsprozent, bezogen auf das Gesamtgewicht der Zusammensetzung, ausgedrückt sind:
a) Mischen von 20 bis 40% Leim, umfassend mindestens ein Öl und mindestens ein Harz, mit 10 bis 20% Öl,
b) Erhitzen der in a) erhaltenen Zusammensetzung bei einer Temperatur von 40 bis 90°C,
c) Mischen von 10 bis 30% Latex mit 5 bis 15% Wasser,
d) Zugabe der im Schritt c) erhaltenen Zusammensetzung zu der im Schritt b) erhaltenen Zusammensetzung,
e) Mischen der im Schritt d) erhaltenen Zusammensetzung mit 10 bis 30% Latex und
f) Mischen der im Schritt e) erhaltenen Zusammensetzung mit 20 bis 40% Leim bei einer Temperatur von 40°C bis 90°C, wobei selbstverständlich ist, dass der Leim selbst 40 Gew.-% bis 80 Gew.-% Öl und 20 Gew.-% bis 60 Gew.-% Harz, bezogen auf das Gesamtgewicht des Leims, umfasst.

10. Verfahren zur Herstellung einer Zusammensetzung nach Anspruch 8, das die nachstehenden aufeinander folgenden Schritte umfasst, wobei die Prozentangaben in Gewichtsprozent, bezogen auf das Gesamtgewicht der Zusammensetzung, ausgedrückt sind:
a) 1:1-Verdünnung Wasser/Latex (60%), die 50% des Endprodukts ausmacht
b) Einbringen von Öl in den verdünnten Latex, das 12,5% des Endprodukts ausmacht
c) Erhitzen (zwischen 400°C und 900°C) und Einbringen des Leims in das (Öl + Latex)-Gemisch, der 37,5% des Endprodukts ausmacht.

11. Verwendung einer Zusammensetzung nach einem der Ansprüche 1 bis 8 zur Herstellung einer für ein Insekt dichten Beschichtung auf der Oberfläche einer Pflanze.

12. Verwendung nach Anspruch 11, um einen Befall von Palmen durch Insekten zu bekämpfen, die zu den Spezies gehören, die aus der aus *Rynchophorus ferrugineus, Rynchophorus vulneratus, Rynchophorus lobatus, Rynchophorus distinctus* und *Rynchophorus bilineatus* bestehenden Gruppe ausgewählt sind.

## Claims

1. Composition for forming an insect-proof coating at the surface of a plant, comprising
(i) from 10% to 90% of latex, and
(ii) from 10% to 90% of thickening compound,
the percentages being expressed by weight relative to the total weight of the composition, in which
- the latex is (α) an elastic material produced from natural latex of hevea or (β) is chosen from the group consisting of a natural latex, an elastomer, a polyhydroxyalkanoate, a polylactic acid and mixtures thereof, and
- the thickening compound is a combination (a) of vegetable oil or a mixture of vegetable oils and (b) of a resin or a mixture of resins.

2. Composition according to Claim 1, **characterized in that** the latex is an elastic material produced from natural latex of hevea.

3. Composition according to either of Claims 1 and 2, **characterized in that** the latex comprises at least 30% by weight of polyisoprene.

4. Composition according to one of Claims 1 to 3, **characterized in that** the vegetable oil is chosen from soybean oil, sunflower oil, rapeseed oil, grapeseed oil, peanut oil, olive oil, canola oil, safflower oil, coconut oil, wheat germ oil, linseed oil, maize oil, walnut oil, almond oil, palm oil, castor oil, sesame oil, and mixtures thereof.

5. Composition according to any one of Claims 1 to 4, **characterized in that** the resin is rosin.

6. Composition according to any one of Claims 1 to 5, **characterized in that** it also comprises a wax, a gum, a mucilage and mixtures thereof.

7. Composition according to any one of Claims 1 to 6, **characterized in that** it also comprises one or more emulsifiers.

8. Composition according to one of Claims 1 to 7, **characterized in that** the composition comprises, by weight relative to the total weight of the composition:
- 15% to 30% of resin,
- 25% to 50% of oil, and
- 20% to 60% of latex.

9. Process for preparing a composition as defined in Claim 8, comprising the following successive steps, in which the percentages are expressed by weight relative to the total weight of the composition:
a) mixing from 20% to 40% of glue comprising at least one oil and at least one resin with 10% to 20% of oil,
b) heating the composition obtained in a) to a temperature of 40 to 90°C,
c) mixing from 10% to 30% of latex with 5% to 15% of water,
d) adding the composition obtained in step c) to the composition obtained in step b),
e) mixing the composition obtained in step d) with 10% to 30% of latex, and
f) mixing the composition obtained in step e) with 20% to 40% of glue, at a temperature of 40°C to 90°C, it being understood that the glue itself comprises, relative to the total weight of the glue, 40% to 80% by weight of oil and 20% to 60% by weight of resin.

10. Process for preparing a composition according to Claim 8, comprising the following successive steps, in which the percentages are expressed by weight relative to the total weight of the composition:
a) 1:1 dilution water/latex (60%) representing 50% of the final product,
b) incorporation into the diluted latex of oil representing 12.5% of the final product,
c) heating (between 400°C and 900°C) and incorporation into the mixture (oil + latex) of the glue representing 37.5% of the final product.

11. Use of a composition according to any one of Claims 1 to 8, for forming an insect-proof coating at the surface of a plant.

12. Use according to Claim 11, for fighting the infestation of palm trees by insects belonging to the species chosen from the group consisting of *Rynchophorus ferrugineus, Rynchophorus vulneratus, Rynchophorus lobatus, Rynchophorus distinctus* and *Rynchophorus bilineatus.*
